# EUROPEAN PATENT APPLICATION

(11) **EP 2 267 630 A1**
(43) Date of publication of application: **29.12.2010**
(21) Application number: 08873479.3
(22) Date of filing: 26.12.2008
(51) Int. Cl.: G06F 21/20

(54) **AUTHENTICATION SERVER AND LINE SERVER**

(30) Priority: 19.03.2008 WO PCT/JP2008/055129
(71) Applicant: Suginaka, Junko, Minato-ku, Tokyo 105-0001 (JP)
(72) Inventor: FURUKAWA, Yoshihisa, Niiza-shi Saitama 351-0035 (JP); SUGINAKA, Junko, Tokyo 105-0001 (JP)
(74) Representative: Appelt, Christian W.
(86) International application number: PCT/JP2008/073773
(87) International publication number: WO 2009/116220

(57) **Abstract**

When a reader/writer 3 is connected to a modem device 1 and makes communication with an authentication server 6 using the Internet line 5 and the like, an ID unique to the modem device 1, which has been written to the modem device 1 when the modem device 1 is manufactured and cannot be rewritten thereafter, is stored in a modem ID memory 13, an authentication is performed using both the ID unique to the modem device 1 and an ID of an IC card 4, and further a response to an authentication request from the authentication server 6 is sent to the authorized modem device 1. With the operation, the modem device 1 which is generally in power-ON state all the time can detect the unauthorized access by receiving the response to the authentication request even when an authentication-request-in-progress flag 14 is OFF.

## Description

### [Technical Field]

The present invention relates to an authentication server and a line server improved so that the identity of a person who performs communication can be confirmed in communication via a private network line and the Internet line.

### [Background Art]

Conventionally, there has been known an electronic money charging method in which when the remaining amount of electronic money stored in an IC card runs out, a server authenticates the IC card using a reader/writer connected to a personal computer to read and write the IC card, and only when the IC card is authenticated, money is charged on the IC card (refer to, for example, Patent Literature 1).
[Patent Literature 1] JP, 2006-134195, A

### [Summary of Invention]

### [Technical Problem]

In the authentication method, since the server authenticates based only on the information contained in the IC card, a problem arises in that unauthorized authentication due to a forged IC card and masquerading cannot be detected.

The present invention was made in view of the problem described above, and an object thereof is to provide an authentication server and a line server making it difficult to masquerade by the forgery of an IC card, and the like in communication via a private network line and the Internet line.

### [Solution to Problem]

To achieve the above-described object, an authentication server according to a first aspect of the present invention comprises: an authentication database for storing authentication information in which a user is associated with a modem ID which is given to a modem device owned by the user and is unique to the individual modem device; and a reception function for receiving a packet including authentication request information including a modem ID transmitted from a line server; a control function for checking the authentication request information with the authentication information read from the authentication database, confirming with the modem device to which the modem ID is given whether or not authentication is requested if a result of the check is "accepted", setting the result of authentication to "accepted" if an unauthorization notification is not returned, and setting the result of authentication to "denied" if a result of the check is "denied" or if the unauthorization notification is returned from the modem device; and a transmission function for transmitting the result of authentication to the modem device.

Further, an authentication server according to a second aspect of the present invention comprises: a line database for storing a line ID given to a line wired to a building of a user by a line company; a reception function for receiving a packet transmitted from a modem device; a control function for determining whether or not a modem ID, which is given to the modem device and is unique to the individual modem device, is included in the packet, reading the line ID of the line through which the packet is transmitted and writing the line ID to the packet when the modem ID is included, and keeps the packet as it is when the modem ID is not included; and a transmission function for transmitting the packet to which the line ID is written or is not written by the control function.

### [Advantageous Effects of the Invention]

According to the authentication server according to the first aspect of the present invention, the authentication server does not perform authentication based only on the information contained in the IC card but performs the authentication using both the information contained in the IC card and the ID unique to the modem device and further a response to an authentication request from the authentication server is sent to an authorized modem device 1. With the operation, the modem device which is generally in power-ON state all the time can detect the unauthorized access by receiving a response to the authentication request even when an authentication-request-in-progress flag 14 OFF. The authorized modem device notifies the authentication server of that an unauthorized communication is performed, and thus a forged IC card and disguise such as masquerading of the equipment and the line used for authentication can be securely detected.

According to the line server according to the second aspect of the present invention, the line ID is written to a packet for an authentication request including the modem ID, and thus the authentication server can perform authentication using both the modem ID and the line ID as to the received packet for an authentication request. Therefore, when a user uses a specific modem device in a specific location to which a specific line is wired, the authentication server properly performs authentication, and thus it becomes difficult to forge an IC card and to perform disguise such as masquerading of the equipment and the line used for the authentication.

### [Brief Description of Drawings]

[Fig. 1] Fig. 1 is a view showing configurations of an authentication server and a line server according to an embodiment of the present invention.
[Fig. 2] Fig. 2 is a view showing an example of an authentication database.
[Fig. 3] Fig. 3 is a flowchart showing an operation of a control function of a modem device.
[Fig. 4] Fig. 4 is a flowchart showing an operation of a control function of a line server.
[Fig. 5] Fig. 5 is a flowchart showing an operation of a control function of an authentication server.

### [Reference Signs List]

- 1: Modem device
- 2: Personal computer
- 3: Reader/writer
- 4: IC card
- 5: Line
- 6: Authentication server
- 7: Line server
- 11: Modulation/demodulation function
- 12: Control function
- 13: Modem ID memory
- 14: Authentication-request-in-progress flag
- 61: Control function
- 62: Authentication database
- 71: Control function
- 72: Line database

### [Description of Embodiment]

Hereinafter, a best mode for carrying out the present invention will be described below in detail with reference to the accompanying drawings.

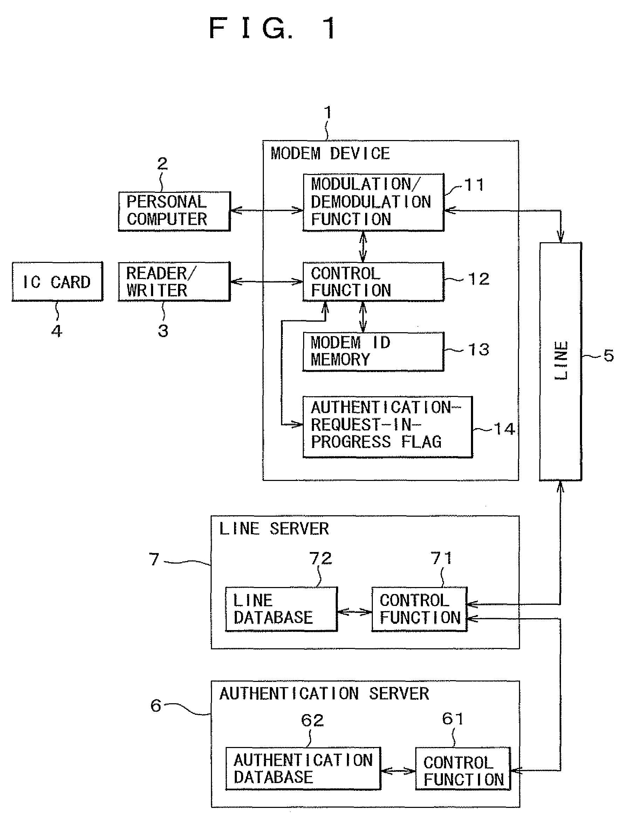

Fig. 1 is a view showing configurations of an authentication server and a line server according to an embodiment of the present invention. In Fig. 1, although a modem device 1, a personal computer 2, a reader/writer 3, an IC card 4, and a line 5 are not a part of the present invention, they are shown to explain functional operations of an authentication server 6 and a line server 7.

The modem device 1 includes a modulation/ demodulation function 11, a control function 12, a modem ID memory 13, and an authentication-request-in-progress flag 14. To the modem device 1, the reader/writer 3 having a function for reading and updating the contents stored in the IC card 4 in response to an instruction of the control function 12 is connected.

The modulation/demodulation function 11 is connected to the personal computer 2 and the line 5. The modulation/demodulation function 11 demodulates a communication signal, which corresponds to a communication method such as an optical transmission, a wireless transmission, or a wired transmission in conformity with the characteristics of the line 5 from the line server 7 managed by a line company (a so-called carrier) in response to an instruction of the control function 12 and transmits the received signal to the personal computer 2. On the other hand, the modulation/demodulation function 11 modulates a carrier wave using a transmitted signal from the personal computer 2, to convert the transmitted signal to a communication signal, and transmits the communication signal to the line server 7 via the line 5. In the modem ID memory 13, a unique modem ID, which is determined when the modem device 1 is manufactured or shipped and cannot be changed after the modem device 1 is shipped, is stored.

The modem device 1 is connected to the authentication server 6 managed by a communication company (so-called ISP), which provides, for example, an electronic money service, via the line 5.

The authentication server 6 is connected to the modem device 1 via the line 5 as well as connected to (n-1) sets of modem devices (not shown) via (n-1) lines (not shown) , respectively, where n represents an arbitrary positive integer. More specifically, the authentication server 6 is connected to n sets of modem devices including the modem device 1 via n lines including the line 5.

The authentication server 6 includes a control function 61 and an authentication database 62, and the authentication database 62 stores the authentication information including the information of the n lines connected to the authentication server 6, modem IDs of the n sets of the modem devices, and the like.

The line server 7 includes a control function 71 and a line database 72, and the line database 72 stores the IDs of the n lines connected to the line server 7 and the user names of the lines, while associated to each other.

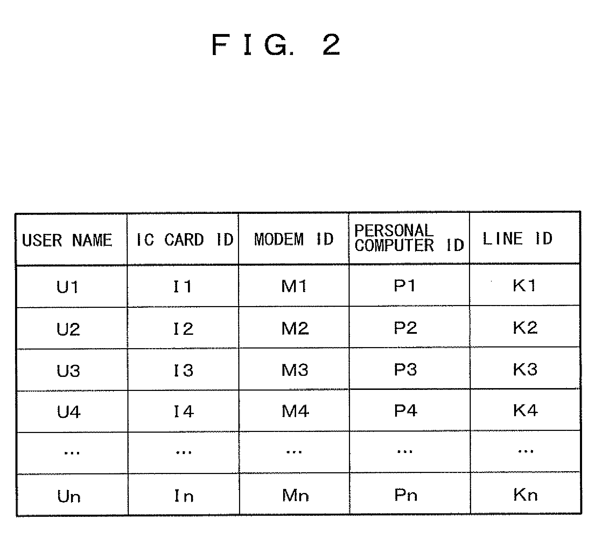

Fig. 2 shows an example of the authentication database 62.

In FIG. 2, U1 to Un represent the user names of the modem devices registered in the authentication database 62, and line IDs K1 to Kn, modem IDs M1 to Mn, IC card IDs I1 to In, and personal computer IDs P1 to Pn respectively associated with the respective user names U1 to Un are registered in the authentication database 62.

An example, in which a user of the line 5, the modem device 1, the IC card 4, and the personal computer 2 shown in Fig. 1 corresponds to the user name U1, will be described below.

The line ID K1 is an ID given to the line 5 wired to a building of the user by the line company and is an ID unique to the individual line 5. In actual communication, the line server 7, which is managed by the line company, writes the line ID of the line 5 in use to a packet transmitted by the modem device 1 and transmits the packet to the authentication server 6.

The modem ID M1 is a modem ID unique to the modem device 1.

The IC card ID I1 is an ID which is given by an issuer of the IC card 4 when the issuer issues the IC card 4 and is unique to the IC card 4.

The personal computer ID P1 is an ID unique to the personal computer 2 and is, for example, a physical address (MAC address) given to the personal computer 2.

The contents described as to the user name U1 can be applied similarly to the user names U2 to Un, and the IDs unique to the respective users such as the line IDs K2 to Kn, the modem IDs M2 to Mn, the IC card IDs I2 to In, and the personal computer IDs P2 to Pn are registered in the authentication database 62 while associated with the respective user names U2 to Un.

The registration is performed, for example, as follows. First, the communication company issues the IC card 4 to the user. The IC card 4 is issued after confirming an identification card such as a driver's license and the like in a face-to face interview, and an address and a name are recorded as relating information. The user buys the modem device 1, connects the modem device 1 to the line 5, reads the information in the IC card 4, and starts communication, thereby registering the line ID the modem ID, and the IC card ID to the authentication server 6 as a set. Further, as to the personal computer ID, when the personal computer 2 is connected to the modem device 1, the modem device 1 may read the personal computer ID, and may additionally register the personal computer ID. Alternatively, all the IDs can be also registered by the user writing all the IDs to a document, bringing and submitting the document to the communication company.

The example of the authentication database 62 is shown by Fig. 2 here. The line database 72 is created and maintained by the line company, and the IDs of the n lines connected to the line server 7 and the user names of the lines are stored in the line database 72 while associated to each other.

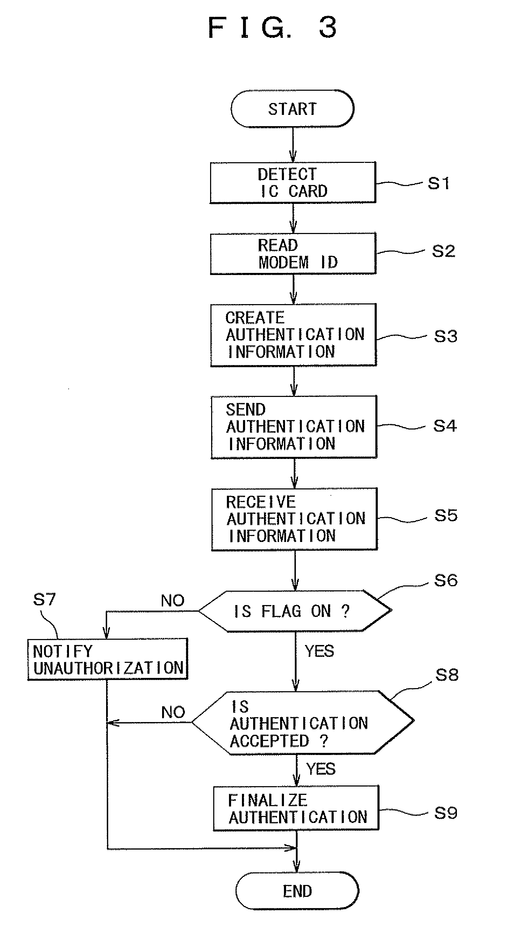

Fig. 3 is a flowchart showing an authentication operation of the control function 12 of the modem device 1. The authentication operation of the control function 12 will be described below in detail with reference to FIG. 3.

In an IC card detection step S1 which may be performed continuously or intermittently, the control function 12 detects that the IC card 4 is mounted on or held above the reader/writer 3 and then reads the IC card ID I1 of the IC card 4.

When the IC card 4 is detected, the control function 12 starts a modem ID reading step S2 to read the modem ID M1 stored in the modem ID memory 13.

In an authentication information creation step S3, the control function 12 creates authentication information including the IC card ID I1 and the modem ID M1 which are read in the steps S1 and S2, and the personal computer ID P1 of the personal computer 2.

In an authentication information sending step S4, the control function 12 turns ON the authentication-being-requested flag 14 which is initially set to OFF, creates a transmission signal including the authentication information, sends transmitting carrier wave modulated by the modulation/demodulation function 11 to the line 5, and requests an authentication to the authentication server 6 via the line server 7.

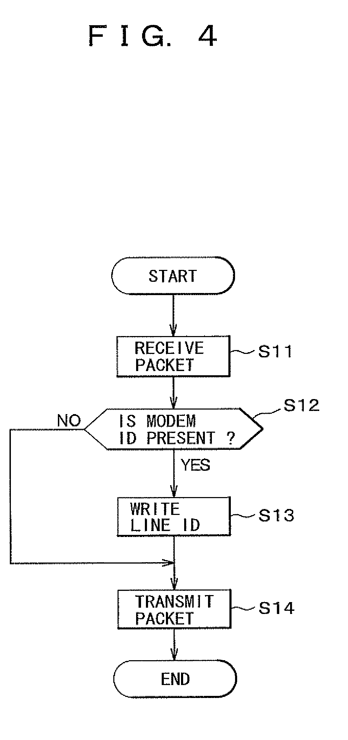

Fig. 4 is a flowchart showing a packet transmit operation of the control function 71 of the line server 7. The packet transmit operation of the control function 71 will be described below in detail with reference to FIG. 4.

In a packet reception step S11, the control function 71 receives the packet from the line 5. In a modem ID present determination step S12, the control function 71 determines whether or not the modem ID is included in the received packet, and when the modem ID is included, starts a line ID writing step S13 via a YES route, reads the line ID of the line through which the packet is received from the line database 72 and writes the line ID to the received packet, and starts a packet transmission step S14. In the modem ID present determination step S12, when the modem ID is not included in the received packet, the control function 71 starts a packet transmission step S14 via a NO route. In the packet transmission step S14, the control function 71 transmits the packet to which the modem ID is written or is not written to the authentication, server 6.

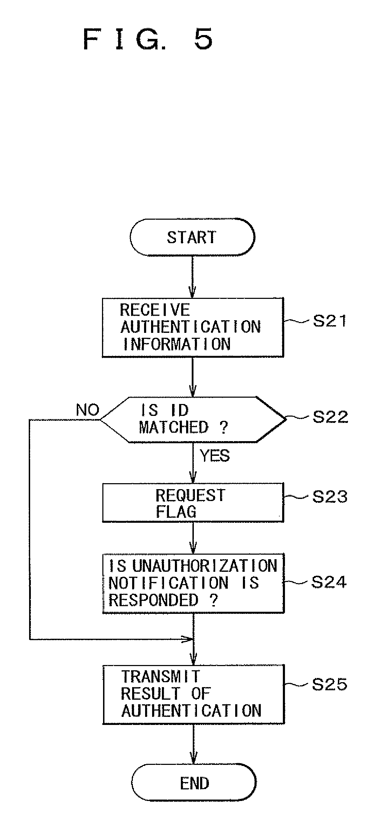

Fig. 5 is a flowchart showing an authentication operation of the control function 61 of the authentication server 6. The authentication operation of the control function 61 will be described below in detail with reference to FIG. 5.

In an authentication information reception step S21, the control function 61 receives the packet including the authentication information via the line 5 and the line server 7. In an ID match determination step S22, when the modem ID is included in the received authentication information, the control function 61 checks the received authentication information with the authentication information read from the authentication database 62, and when both the authentication information match each other, the control function 61 starts a flag request step S23 via a YES route, and requests the modem device 1 to confirm that the authentication-being-requested flag 14 is ON. If the authentication-being-requested, flag 14 is OFF because the modem device 1 is not requesting the authentication, which means that an unauthorized authentication request from another modem device is being processed, the modem device 1 makes a response for reporting that an unauthorized authentication request has been made. In an unauthorization notification response present determination step S24, the control function 61 determines whether or not there is a response indicating that an unauthorized authentication has been requested from the modem device 1. When both the checked authentication information do not match each other in the ID match determination step S22, through a NO route, or when the control function 61 receives the response to report the unauthorization in the unauthorization notification response present determination step S24, the control function 61 starts the authentication result transmission step S25 to transmit a signal indicating that a result of authentication is "denied" to the modem device 1 having the modem ID M1 associated with the user name U1 of the authentication information, as a response to the authentication request and then finishes the authentication operation. When the response of the unauthorization notification is not received in the unauthorization notification response present determination step S24, the control function 61 starts the authentication result transmission step S25 to transmit a signal, which indicates that the result of authentication is "accented" to the modem device 1 having the modem ID M1 associated with the user name U1 of the authentication information, as a response to the authentication request together with a temporary password, and then finishes the authentication operation.

Returning to Fig. 3, the control function 12 of the modem device 1 causes the modulation/demodulation function 11 to demodulate the signal received from the authentication server 6, receives the result of authentication by the authentication server 6 in an authentication reception step S5, and starts a flag-on determination step S6.

In the flag-on determination step S6, the control function 12 determines whether or not the authentication-request-in-progress flag 14 is ON, and when the authentication-request-in-progress flag 14 is ON, the control function 12 determines whether or not the result of authentication received from the authentication server 6 indicates "accepted" or "denied" in an authentication acceptance determination step S8 via a YES route. In the flag-on determination step S6, when the authentication-being-requested flag 14 is OFF rather than ON, the control function 12 starts an unauthorization notification step S7 via a NO route to notify the authentication server 6 of that an unauthorized authentication request has been performed, and then and finishes the authentication operation.

In the authentication acceptance determination step S8, when the result of authentication is "accepted", the control function 12 starts an authentication finalizing step S9 via a YES route to send an authentication finalize signal, which replies to the authentication server 6 with a message telling that the control function 12 has certainly received a signal indicating that the result of authentication is "accepted" via the line 5 together with the password, notifies the reader/writer 3 or the personal computer 2 of the result as necessary to prompt the reader/writer 3 or the personal computer 2 to perform a subsequent process, and finishes the authentication operation.

In the authentication acceptance determination step S8, when the result of authentication is "denied", the control function 12 directly finishes the authentication operation via a NO route.

According to the authentication operation performed in the IC card detection step S1 to the authentication finalizing step S9, the modem device 1 turns ON the authentication-request-in-progress flag 14 in a condition where the IC card 4 is mounted on the reader/writer 3, then sends the authentication information to the authentication server 6. Only when the modem device 1 receives a response indicating that the result of authentication is "accented" from the authentication server 6, the modem device 1 sends the authentication finalize signal to the authentication server 6. Accordingly, the control function 61 of the authentication server 6 needs to admit that the modem device 1 is an authorized communication partner only when the control function 61 receives the authentication finalize signal including the password from the modem device 1 and continue a subsequent process as necessary, and when the control function 61 does not receive the authentication finalize signal, the control function 61 may finish the process admitting that the modem device 1 is an unauthorized communication partner.

It should be noted that since the control function 61 of the authentication server 6 performs the authentication process using the received authentication information including the IC card ID I1, the modem ID M1, and the personal computer ID P1 of the personal computer 2 and using the line ID K1, the control function 61 sets the result of authentication to "accepted" only when all the IC card ID I1, the modem ID M1, the personal computer ID P1 of the personal computer 2, and line ID K1 match, in addition, a response to the authentication request from the authentication server 6 is sent to the authorized modem device 1. More specifically, according to the present invention, even if an unauthorized access by masquerading using entirely disguised authentication information and the line ID K1 is made, the response to the authentication request from the authentication server 6 is sent to the authorized modem device 1. Therefore, the modem device 1 which is generally in power-ON state all the time, can detect the unauthorized access by receiving the response to the authentication request even when the authentication-request-in-progress flag 14 is OFF. As a result, the authorized modem device 1 notifies the authentication server 6 of that an unauthorized communication is performed, and thus a forged IC card and disguise such as masquerading of an equipment and a line used for an authentication can be more securely detected.

As described above in detail, the authentication server 6 and the line server 7 according to the embodiment of the present invention has an advantage in that even if there are the forged IC card and the disguise such as the masquerading of the equipment and the line used for the authentication, an unauthorized authentication is not permitted as compared with the conventional technique of performing an authentication using only the IC card ID.

Although the reader/writer 3 is connected to the modem device 1 in the configuration of Fig. 1, it is needless to say that even if the reader/writer 3 is connected to the personal computer 2, the same operation is possible. In the case, in ordinary communication performed by a personal computer, the identity of a user communicating using an IC card can be confirmed, and thus the identity confirmation can be used when shopping is made through a network and when public documents is sent.

Note that, in the embodiment of the present invention described above, the control function 61 of the authentication server 6 sets the result of authentication to "accepted" only when the authentication information associated with the user name U1 having the IC card of the IC card ID I1, and the line ID K1 completely matches authentication information, but instead, the control function 61 may accept the authentication when the IC card ID I1 and the modem ID M1 associated with the user name U1, and the line ID K1 match. In the case, since the personal computer ID P1 is not used for the authentication operation, when a process, which is necessary after authentication is a simple process without a need of operation of the personal computer 2 such as an automatic charge of electronic money, the authentication operation can be promptly and simply performed without a time-consuming step of powering ON the personal computer 2 and starting up the personal computer, which is advantageous.

Further, in the example of the database shown in Fig. 2, each one of the line IDs K1 to Kn, the modem IDs M1 to Mn, the IC card IDs I1 to In, and the personal computer IDs P1 to Pn are allocated to each of the user names U1 to Un, but it is needless to say that plural different IDs may be allocated to each of the user names U1 to Un. This is, for example, a case in which a user uses plural lines, modem devices, IC cards, or personal computers.

It is needless to say that a packet address itself of the modem device 1 may be used as the modem IDs M1 to Mn sent from the modem device 1 and may be sent as a transmission source address (for example, a transmission source IP address) in a header section of the packet, or data relating to the transmission source address may be sent as data in a payload section of the packet.

As described above in detail, according to the authentication server and the line server of the present invention, since authentication is performed using both the IC card ID and the modem ID, even if there is disguise such as a forged IC card and masquerading, the authentication server and the line server which do not permit unauthorized authentication can be provided.

The disclosure of International Patent Application No. PCT/JP2008/055129, which includes a description, claims and drawings and was filed on March 19, 2008, is incorporated herein by reference.

All publications, patents, and patent applications cited in the present Specification are incorporated herein by reference.

## Claims

1. An authentication server comprising:
an authentication database for storing authentication information in which a user is associated with a modem ID which is given to a modem device owned by the user and is unique to the individual modem device; and
a reception function for receiving a packet including authentication request information including a modem ID transmitted from a line server;
a control function for checking the authentication request information with the authentication information read from the authentication database, confirming with the modem device to which the modem ID is given whether or not authentication is requested if a result of the check is "accepted", setting the result of authentication to "accepted" if an unauthorization notification is not returned, and setting the result of authentication to "denied" if a result of the check is "denied" or if the unauthorization notification is returned from the modem device; and
a transmission function for transmitting the result of authentication to the modem device.

2. A line server comprising:
a line database for storing a line ID given to a line wired to a building of a user by a line company;
a reception function for receiving a packet transmitted from a modem device;
a control function for determining whether or not a modem ID, which is given to the modem device and is unique to the individual modem device, is included in the packet, reading the line ID of the line through which the packet is transmitted and writing the line ID to the packet when the modem ID is included, and keeps the packet as it is when the modem ID is not included; and
a transmission function for transmitting the packet to which the line ID is written or is not written by the control function.
